# EUROPEAN PATENT APPLICATION

(11) **EP 4 471 269 A1**
(43) Date of publication of application: **04.12.2024**
(21) Application number: 23176614.8
(22) Date of filing: 01.06.2023
(51) Int. Cl.: F03D 1/06, B29D 99/00

(54) **METHOD FOR MANUFACTURING A HALF-SHELL FOR A SEGMENTED WIND TURBINE ROTOR BLADE AND METHOD FOR MANUFACTURING A WIND TURBINE ROTOR BLADE**

(71) Applicant: Nordex Blade Technology Centre ApS, 5771 Stenstrup (DK)
(72) Inventor: Sørensen, Flemming, 5771 Stenstrup (DK)
(74) Representative: Epping - Hermann - Fischer

(57) **Abstract**

The invention concerns a method for manufacturing a half-shell comprising the following steps:
- providing a plurality of first connection elements (154) and second connection elements (156),
- providing an intermediate connection piece (162) having a U-shaped cross-section (164),
- fixing the intermediate connection piece (162) to the first and second connection elements (154, 156) such that a rigid sub-unit (176) is formed,
- arranging the rigid sub-unit (176) in a mold (178) for the half-shell (150a, 150b) of the wind turbine rotor blade (110), and
- manufacturing the half-shell (150a, 150b) in which the rigid sub-unit (176) is embedded, such that a first flange laminate (180) and a second flange laminate (182) are formed which are interconnected by the intermediate connection piece (162) .

The invention also concerns a method for manufacturing a wind turbine rotor blade.

## Description

The invention relates to a method for manufacturing a half-shell for a segmented wind turbine rotor blade and to a method for manufacturing a wind turbine rotor blade.

Wind turbines with wind turbine rotor blades are widely known from the state of the art and are used to convert wind energy into electrical energy. A rotor blade can be designed as a split or segmented rotor blade comprising rotor blade segments, which are arranged and joined together lengthwise to form an entire rotor blade. Mechanical connections are generally used to join the two rotor blade segments. Typically, a plurality of connection elements (so-called inserts, for example cross bolts or bushings) is integrated into the laminate of each rotor blade segment, by means of which the rotor blade segments can be connected to each other, either directly or via one or more suitable intermediate connection pieces. Typically, fastening means such as fastening bolts, e.g. screw bolts, or the like are used for a direct connection or for connection to the one or more intermediate connection pieces. For example, the connection elements are located in the laminate of a respective connecting flange of the rotor blade segments.

A generic structure is known, for example, from international application WO 2015/124568 A1.

Segmented rotor blades are becoming increasingly important and provide advantages, in particular for transport reasons, since the overall length of rotor blades tends to increase for a higher energy output.

One task underlying the present invention is to provide a concept for segmented rotor blades which ensures an easy manufacturing process.

The object is solved by the independent claims and the respective sub-claims.

According to a first aspect, a method is disclosed for manufacturing a half-shell for a segmented wind turbine rotor blade. The method comprises the following steps:
- providing a plurality of first connection elements and second connection elements,
- providing an intermediate connection piece having a first flange and a second flange running parallel in a distance from each other,
- fixing the first flange of the intermediate connection piece to the first connection elements and fixing the second flange of the intermediate connection piece to the second connection elements such that a rigid sub-unit is formed, wherein each first connection element faces a corresponding second connection element,
- arranging the rigid sub-unit in a mold for the half-shell of the wind turbine rotor blade, and
- manufacturing the half-shell in which the rigid sub-unit is embedded, such that a first flange laminate and a second flange laminate are formed which are interconnected by the intermediate piece, wherein
   -- the first flange laminate comprises the first connection elements and the second flange laminate comprises the second connection elements, and
- the first flange laminate is associated with a first rotor blade segment and the second flange laminate is associated with a second rotor blade segment of the segmented wind turbine rotor blade.

The method according to the invention provides for the production of a rotor blade half-shell formed from two (half-shell) segments. As the essential feature, the rotor blade half-shell is produced as a whole. In other words, the individual (half-shell) segments are not each manufactured separately. Rather, an intermediate connection piece having a first and a second flange, which are running parallel in a distance to each other, is foreseen, by means of which the two (half-shell) segments are mechanically connected during manufacturing. Consequently, due to the production of the half-shell as a whole, the two segments can be disassembled after the production of the entire rotor blade which is formed from two half-shells. Such disassembly, for example, is necessary because of transport restrictions. For disassembly, only the intermediate connection piece has to be dismantled, i.e. the connection of the first flange and the second flange to the respective first and second connection elements has to be released.

The inventive method offers several advantages, some of which are explained in the following:
- Manufacturing-related tolerances, which are relevant for the later assembly of both rotor blade segments, can be compensated very well, at least better than compared to an individual manufacture of each (half-shell) segment.
- An outer shell contour with optimum aerodynamic properties is achieved since both (half-shell) segments are aligned perfectly to each other during the production of the half-shell as a whole. Thus, the two half-shells are optimally matched to each other. This is particularly advantageous when the rotor blade segments are assembled at the installation site at a later date.
- Since the half-shell is manufactured as a whole, a demolding of the rotor blade from a mold is much easier. Since demolding is a laborious process, it does not have to be performed twice, namely for each rotor blade segment.
- Further, the entire half-shell does not need to be cut or sawn chordwise to produce the two (half-shell) segments. Rather, the intermediate piece needs to be dismounted, e.g. unscrewed.

In general, manufacturing the half-shell means that the laminate or laminate layers are provided with resin (by vacuum infusion, the use of pre-pegs or hand lamination) and cured, which is a typical manufacturing process known to the person skilled in the art. In this step, the laminate or laminate layers and the connection elements are firmly bonded together to form a rigid structure.

As already indicated above, the connection elements are so-called inserts and are, for example, metal bushings. In the interconnected state during manufacture (by means of the intermediate connection piece) and also at a later stage, i.e. in the final state of the wind turbine rotor blade, a first connection element is assigned to a corresponding second connection element in each case. In particular, a first and a corresponding second connection element are aligned flush with one another so that they can be mechanically connected to one another, in particular by means of a bolt connection. The first and second connection elements are arranged adjacently along the outer contour or circumference of the half-shell.

The connections of the intermediate connection piece to the first connection elements and the second connection elements are mechanical flange connections. In particular, the connections are screw connections by means of screw bolts or bolt-nut connections.

The rigid sub-unit is built by fixing the intermediate connection piece to the first connection elements and to the second connection elements. Thus the rigid sub-unit comprises at least the connection elements and the intermediate connection piece. The term "rigid" means a stiff, mechanically fixed connection. The rigid sub-unit can be moved, transferred and arranged/placed into the mold as a whole.

Flange laminate means a laminate structure in which the first or second connection elements are embedded. By means of the flange laminate, a flange is formed to mechanically connect the respective (half-shell) segment to the other (half-shell) segment.

In the context of this disclosure, the term "half-shell" is also understood to mean a half-shell of an integrally manufactured, entire rotor blade, wherein in such entirely produced rotor blade (so-called "one shot" production) a half-shell thus represents the suction-side or pressure-side shell portion of the entire rotor blade, e.g. a portion running from the trailing edge to the leading edge. In other words, a half-shell is not only to be understood as a separate manufactured component, which is connected to another separate hall-shell component but can also be seen as portion of an integrally produced whole rotor blade blade, e.g. a portion of a one-piece component.

The intermediate connection piece is preferably formed in one piece and runs chordwise along the contour of the half-shell in the area where the two flange laminates connect. The first flange and the second flange are arranged in parallel and have a predetermined distance to each other, which is retained by a bridging element.

According to an embodiment, wherein in the step of providing a plurality of first connection elements and second connection elements, a first flange insert and a second flange insert are provided, wherein the first connection elements are embedded in the first flange insert and the second connection elements are embedded in the second flange insert. Thus, the connection elements are not, for example, provided or placed individually in order to be screwed to the intermediate piece. But the first and second connection elements are each provided as a structural unit, namely as a respective flange insert. Each flange insert is to be regarded as a separate, rigid unit comprising both the first and second connecting elements embedded in a laminate. Thus, for example, only three separate components, namely the two flange inserts and the intermediate connection piece, are provided and connected by means of screws or bolts. This ensures that the connection is of high quality, since the first and second connection elements can each be perfectly aligned and fixed with respect to each other before being connected to the intermediate connection piece. Further, this embodiment helps to shorten the production time of the half-shell.

According to an embodiment, the intermediate connection piece defines a predetermined distance and orientation of the first connection elements and the second connection elements. In particular, a predetermined distance and orientation of the first connection elements with respect to the second connection elements is defined. This contributes to the above-mentioned functions and advantages. In particular, a perfect spacing and alignment between the (half-shell) segments is already provided during production. In other words, the orientation, spacing and alignment between the (half-shell) segments during production corresponds exactly to the distance that the rotor blade segments have in the finally installed state at the wind turbine.

According to an embodiment, the intermediate connection piece is fixed to the first connection elements and the second connection elements such that an outer surface of the first flange laminate is flush with respect to an outer surface of the second flange laminate. This contributes to the above-mentioned functions and advantages. In particular, this ensures an ideal aerodynamic outer contour of the wind turbine rotor blade.

According to an embodiment, the intermediate connection piece is both screwed to the first connection elements of the first flange laminate and the second connection elements of the second flange laminate. This contributes to the above-mentioned functions and advantages.

According to an embodiment, the intermediate connection piece is made of a metal material, in particular of a steel material. This contributes to the above-mentioned functions and advantages. Thus, a very stiff rigid sub-unit is formed, thereby guaranteeing the perfect alignment and orientation of the first and second connection elements to each other, as described above.

According to an embodiment, the intermediate connection piece has an U-shaped cross-section. The U-shape is formed by the first and second flanges and a bridging element, wherein the bridging element is arranged between the first and second flange and provides a rigid connection between them. The bridging element can be formed by several ribs or as a (curved) plate running over the whole length of the flanges. The intermediate connection piece can be connected to the first and second connecting elements particularly easily due to the U-shape. The U-shape (cross-section) ensures good accessibility to the respective flanges from inside the intermediate connection piece, so that assembly and disassembly can be carried out easily.

According to an embodiment, the U-shaped cross-section of the intermediate connection piece forms a receiving channel, wherein a filler material is inserted in the receiving channel. In other words, the receiving channel is formed due to the U-shaped cross-section. In other words, the intermediate connection element comprises a receiving channel. The receiving channel is defined by the first flange and the second flange as well as the bridging element. For manufacturing the half-shell, the receiving channel is filled with filler material, such that the entry of resin into the channel is prevented during the step of manufacturing the half-shell. The filler material can be provided as a block shaped element, which is pressed into the receiving channel. Preferably it fills the space provided between the receiving channel and the mold surface completely to avoid the intrusion of resin during the vacuum infusion of the half-shell. At a later stage, the filler material can be removed, e.g. after production of an entire wind turbine rotor blade. Thus, the mechanical connections to the first and second connection elements can be easily accessed.

According to an embodiment, the filler material is resin repellent. According to an embodiment, the filler material is a silicone material. Thus, after resin infusion, resin does not adhere to the filler material. Further, the filler material can be very easily separated from resin.

According to an embodiment, the receiving channel is directed towards a mold surface when the rigid sub-unit is arranged in the mold. The intermediate connection piece, and thus the receiving channel, is designed and arranged such that the receiving channel is open towards a mold surface when the rigid sub-unit is placed in the mold. When demolded, the receiving channel is thus open towards an outside of the half-shell. Thus, very good access to the intermediate connection piece, and in particular to the mechanical connections, to the first and second connection elements is ensured. For example, the screw bolts can be easily accessed for disassembling the intermediate connection piece, as described above.

According to an embodiment, the mold comprises positioning means, wherein the positioning means interact with the intermediate connection piece such that the sub-unit is held in the mold in a predetermined position and orientation. The positioning means may be a marker and/or one or more mechanical means/elements/components like screw points, threaded or non-threaded bore holes, alignment or abutment elements or the like. Thus, a perfect position and orientation of the sub-unit in the mold is guaranteed.

According to an embodiment, the intermediate connection piece comprises a positioning device, wherein the positioning device is fixed to the mold such that the sub-unit is held in the mold in a predetermined position and orientation. The positioning device can be provided in addition to the above-mentioned position means of the mold. Thus, the intermediate connection piece has - similar to the mold above - one or more means/elements/components for perfectly positioning the rigid sub-unit in the mold. For example, the positioning device interacts with mold, e.g. with the positions means of the mold.

Generally, the positioning means and/or the positioning device provide for transverse and longitudinal positioning of the rigid sub-unit in the mold.

According to an embodiment, the positioning device is integrally formed with the intermediate connection piece or is fixedly coupled to the intermediate connection piece. Thus, the intermediate connection piece is already provided with the positioning device, which facilitates the mounting of sub-unit in the mold.

According to an embodiment, the positioning device protrudes outwards from a mold surface and is integrally formed with a mold flange or is fixedly coupled to the mold flange. Thus, a very reliable solution is provided.

According to a second aspect, a method for manufacturing a wind turbine rotor blade is disclosed. The method comprises the steps of:
- providing a first half-shell being manufactured according to a method of an embodiment as described above,
- providing a second half-shell being manufactured according to a method of an embodiment as described above,
- connecting the first half-shell and the second half-shell to form the wind turbine rotor blade,
- demolding the wind turbine rotor blade.

The method enables the above-mentioned functions and advantages. The embodiments, advantages and functions described with respect to the method according to the first aspect analogously apply.

Connecting the half-shells means that one of the first or the second half-shell is placed onto the other half-shell. Subsequently, both half-shells are connected to each other, e.g. by bonding.

Demolding means that the entire wind turbine rotor blade is demolded by removing the mold(s). Alternatively, demolding means that only a mold for one of the first or the second half-shell is removed and the one of first or the second half-shell is freely accessible.

According to an embodiment, both the first and the second half-shells comprise filler material accommodated in the receiving channel of their U-shaped intermediate connection pieces, wherein after the step of demolding the filler material of the first half-shell and the second half-shell is removed from outside of the wind turbine rotor blade. The filler material is, for example, provided in respective receiving channels as described above. This enables the functions and advantages as described above with respect to the first aspect and its embodiments.

According to an embodiment, the intermediate connection piece (for each half-shell) is dismounted in order to get a first rotor blade segment and a second rotor blade segment of the wind turbine rotor blade, in particular after the step of removing the filler material. This enables the functions and advantages as described above with respect to the first aspect and its embodiments.

Further advantages, features and further developments are set out by the following exemplary embodiments which are explained in conjunction with the figures. The same or similar elements or elements acting in the same way are provided with the same reference numerals in the figures, wherein:
Fig. 1 shows a schematic representation of a wind turbine according to one exemplary embodiment,
Fig. 2 shows a schematic representation of a wind turbine rotor blade,
Fig. 3 shows a schematic representation of a cross-section of a wind turbine rotor blade at a division area,
Fig. 4 shows a schematic representation of a cross-section of a wind turbine rotor blade,
Fig. 5 shows a flow chart of a method for manufacturing a half-shell of the wind turbine rotor blade according to an embodiment of the invention,
Fig. 6 to 8 show schematic representations of manufacturing steps of the method according to figure 5,
Fig. 9 shows a flow chart of a method for manufacturing a wind turbine rotor blade according to an embodiment of the invention,
Fig. 10 to 12 show schematic representations of manufacturing steps of the method according to figure 9.

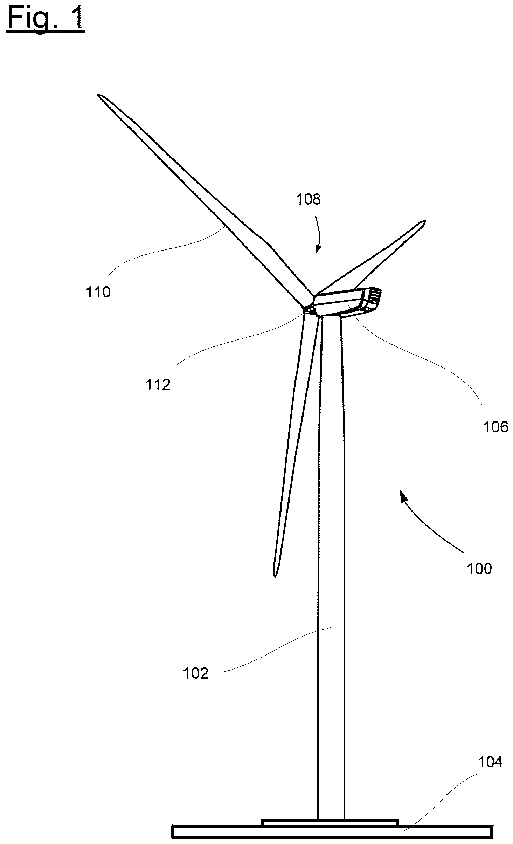

Figure 1 shows a schematic view of a wind turbine 100, which comprises a tower 102. The tower 102 is fixed to the ground by means of a foundation 104. A nacelle 106 is rotatably mounted at one end of the tower 102 opposite to the ground. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the kinetic energy of the rotor 108 into electrical energy.

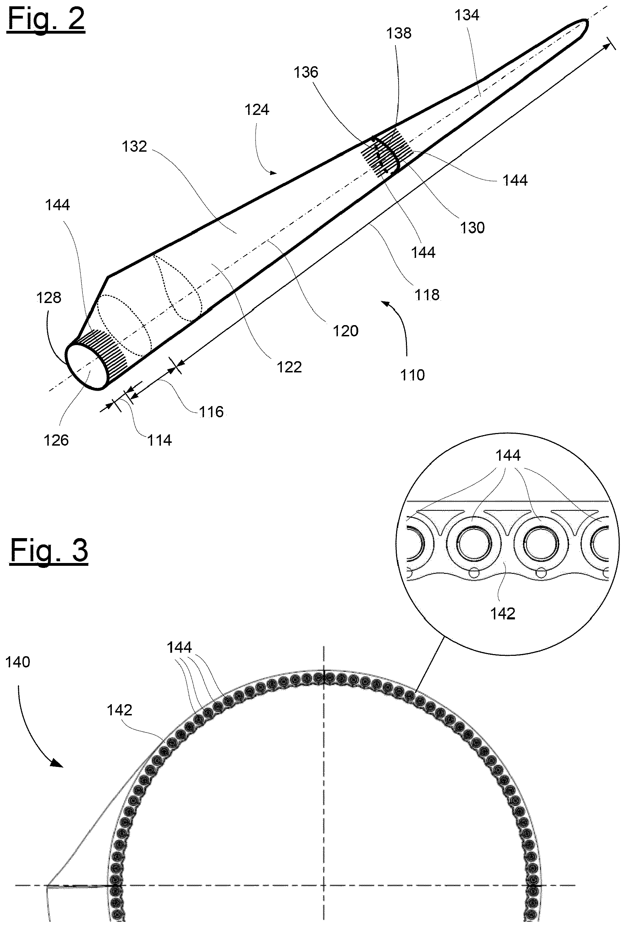

Figure 2 shows an exemplary wind turbine rotor blade 110. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of rotor blade 110. The rotor blade 110 has a pressure side 122 and an opposite suction side 124 with respect to a longitudinal extension direction 120 (also main extension direction). The rotor blade 110 is essentially hollow inside.

A rotor blade connection end 126 with a flange connection 128 are provided in the rotor blade root area 114, by means of which the rotor blade 110 is mechanically connected to a pitch bearing or an extender.

The rotor blade 110 comprises a division area 130 where a blade root-side rotor blade segment 132 and a blade tip-side rotor blade segment 134 are connected to each other. For this purpose, the segments 132, 134 each comprise a segment connection area 136, 138 (also connection ends). The rotor blade 110 is thus a split or segmented rotor blade.

Typically, flange inserts 140 are provided in order to manufacture the flange connection 128 at the rotor blade connection end 126, wherein one flange insert 140 is typically provided for a half-shell of a wind turbine rotor blade 110. Thus, two such flange inserts 140 are needed for the flange connection 128. As shown exemplarily in figure 3, a flange insert 140 (semicircular segment) comprises an arc-shaped laminate 142 (e.g. an inner laminate and an outer laminate), in which a multitude of connection elements 144, i.e. metal bushings, typically being threaded, are embedded, extending in the longitudinal extension direction 120. The connection elements 144 are in particular steel bushings. Fig. 3 also shows an enlarged detail cut-out.

In a typical manufacturing process, a flange insert 140 is initially produced as a half-product or intermediate product, wherein the connection elements 144 are arranged in circumferential direction at fixed distances adjacent to one another. Distance spacing elements are optionally used to ensure the space between two adjacent connection elements 144. The laminate 142 as well as the connection elements 144 are subsequently sealed in an air-tight manner and infused with a matrix material, for instance epoxy resin. In a later step, the flange insert 140 is inserted, for example, into a mold in order to be connected to further laminate layers and to produce a rotor blade (half-)shell for the wind turbine rotor blade 110.

However, it is also conceivable that no flange insert 140 is provided and the connection elements 144 are embedded directly in the laminate of the rotor blade 110, for instance in rotor blade half-shells.

Analogously, the two rotor blade segments 132 and 134 are connected by way of such connection elements 144 with or without flange inserts.

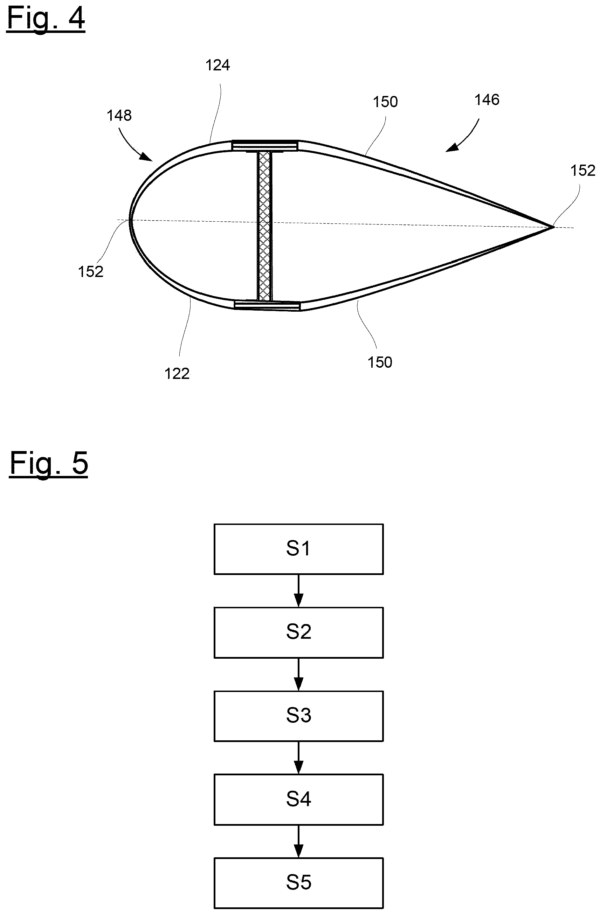

Figure 4 schematically shows a cross-section of a profile 146 (see also figure 2) of the wind turbine rotor blade 110 running traverse to the longitudinal direction 120. The rotor blade 110 comprises a shell 148, which is formed by two half-shells 150, wherein one half-shell 150 corresponds to the pressure side 122 and the other one to the suction side 124.

The two half-shells 150 are firmly connected to each other along the longitudinal direction 120 at opposite connecting surfaces 152 at the leading edge and the trailing edge of the rotor blade.

According to an embodiment of the invention, in the following a method for manufacturing a half-shell 150 for a segmented rotor blade 110 is detailed with regard to figures 5 to 8, wherein figure 5 refers to a schematic flow chart of the method.

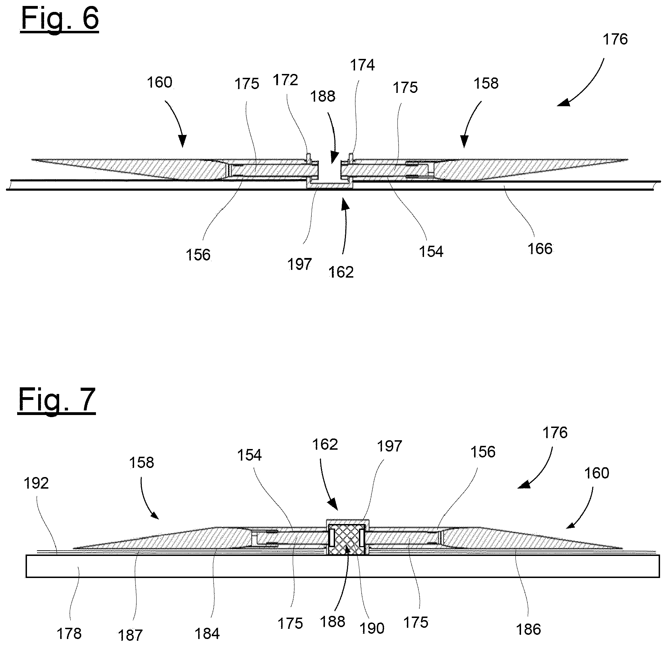

Figure 6 schematically shows a cross-section in lengthwise direction of a first flange insert 158 in which a plurality of first connection elements 154 are embedded, and of a second flange insert 160 in which a plurality of second connection elements 156 are embedded. The first and second connection elements 154 and 156 are each, for example, connection elements 144 as described above with respect to figure 3. Both flange inserts 158 and 160 exemplarily correspond to a flange insert 140 as described above with respect to figure 3. The connection elements 154, 156 of each flange insert 158 and 160 are arranged in a predetermined position.

According to the method, in a first step S1, the plurality of first connection elements 154 and second connection elements 156 is provided by providing the first and second flange inserts 158 and 160.

In a next step S2, an intermediate connection piece 162 is provided. The intermediate connection piece 162 has a U-shape cross-section 164 and has a first flange 172 and a parallel second flange 174, wherein both flanges 172, 174 are connected by a bridging element 197. The intermediate connection piece 162 is made as one piece and is produced from metal, e.g. steel. In the embodiment shown in Fig. 6 the bridging element 197 is plate-shaped and runs over the whole length of the flanges 172, 174.

In a next step S3, the first flange 172 is fixed to the first flange insert 158, in particular by screwing with the first connection elements 154. Likewise, the second flange 174 is connected to the second flange insert 160, in particular by screwing with the second connection elements 156. For screwing, screw bolts 175 are used. Particularly in the connected state, each first connection element 154 is aligned flush with a corresponding second connection element 156.

Thus, in step S3, a rigid sub-unit 176 is formed by the interconnected flange inserts 158, 160 (and thus the connection elements 154, 156) and the intermediate connection piece 162.

It is noted that the connection between the first and second connection elements 154, 156 with the intermediate connection piece 162 can be carried out in other ways, as long as a fixed mechanical connection is established.

In a next step S4 the rigid sub-unit 176 is arranged in a mold 178 for the half-shell 150 of the wind turbine rotor blade 110, which is schematically shown in figure 7.

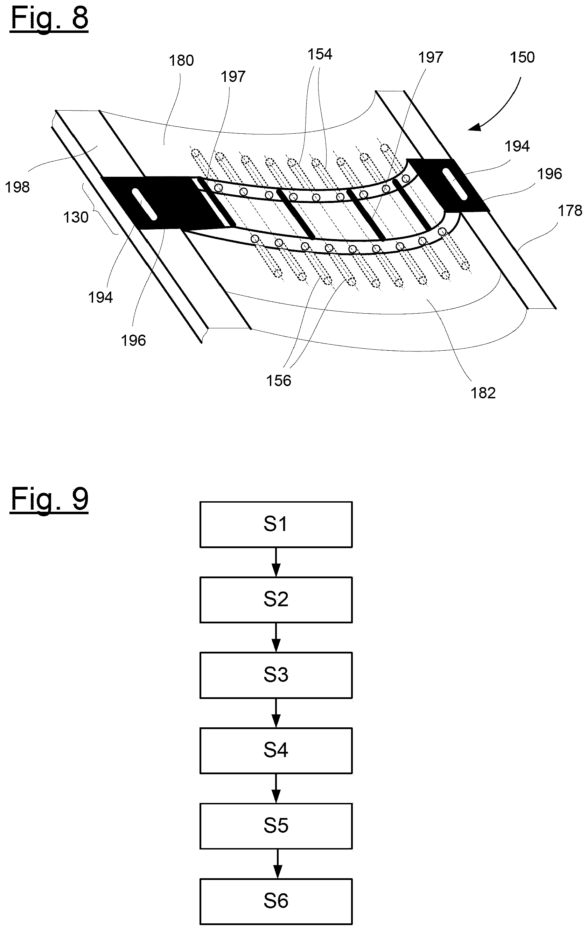

In a further step S5, the half-shell 150 is manufactured as described above by resin infusion of the laminate or laminate layers respectively. The rigid sub-unit is embedded in the half-shell 150. Thus, a first flange laminate 180 and a second flange laminate 182 are formed which are interconnected by the intermediate piece 162, as exemplarily shown in figure 8. The manufactured first flange laminate 180 comprises the first connection elements 154 and the manufactured second flange laminate 182 comprises the second connection elements 156 (only some connection elements are provided with reference signs for the sake of clarity). The first flange laminate 180 is associated with the first rotor blade segment 132 and the second flange laminate 182 is associated with a second rotor blade segment 134 of the segmented wind turbine rotor blade 110.

It is noted that the interconnection between the first and second flange laminates 180, 182 is at the division area 130 as exemplarily described above with respect to figure 2.

It is noted that in Fig. 8 another embodiment of the bridging element 197 is shown, which differs from the embodiments shown in Fig. 6 and 7 in that the bridging element 197 is formed by several ribs or webs. Nevertheless, the intermediate connection piece 162 has a U-shaped cross-section.

As can be exemplarily seen from figure 6, the intermediate connection piece 162 is fixed to the first connection elements 154 and the second connection elements 156 to form the rigid sub-unit 176. All parts are arranged on a pre-assembly table 166. In figure 7 the rigid sub-unit is turned and transferred into the mold 178. It is placed on the outer laminate layers 187 such that an outer surface 184 of the first flange laminate 180 is flush with respect to an outer surface 186 of the second flange laminate 182.

As already described, the intermediate connection piece 162 defines a predetermined distance and orientation of the first connection elements 154 and the second connection elements 156 during manufacturing of the whole half-shell 150.

As can be further seen from figure 7, a receiving channel 188 is formed by the U-shaped cross-section 164 of the intermediate connection piece 162. The receiving channel 188 is directed towards a mold surface 192 of the mold 178 when the rigid sub-unit 176 is arranged in the mold 178. Before turning and transferring the rigid sub-unit 176 into the mold 178 a filler material 190 is inserted in the receiving channel 188, the filler material 190 being a silicon material and thus being resin repellent. Thus, resin cannot enter the receiving channel 188 during manufacturing of the half-shell according to step S5.

Optionally, the mold 178 comprises positioning means 194, as schematically indicated in figure 8. Further, the intermediate connection piece 162 comprises a positioning device 196, as schematically indicated in figure 8. The positioning means 194 interact with the intermediate connection piece 162 such that the sub-unit 176 is held in the mold 178 in a predetermined position and orientation, in particular by interaction with the positioning device 196 of the intermediate connection piece 162. The positioning device 196 is integrally formed with the intermediate connection piece 162 and protrudes outwards from the mold surface 192. For example, the positioning device 196 is fixed at a mold flange 198.

The manufacturing of the half-shell 150 provides the already mentioned functions and advantages.

According to an embodiment of the invention, in the following a method for manufacturing a segmented wind turbine rotor blade 110 is detailed with regard to figures 9 to 12, wherein figure 9 refers to a schematic flow chart of the method.

In a first step S1, a first half-shell 150a is provided, manufactured as described above with respect to figures 5 to 8.

In a second step S2, a second half-shell 150b is provided, manufactured as described above with respect to figures 5 to 8.

In a next step S3, both half-shells 150a, 150b are connected to form the entire wind turbine rotor blade 110 (see also the cross-section profile 146 according to figure 4 as an example).

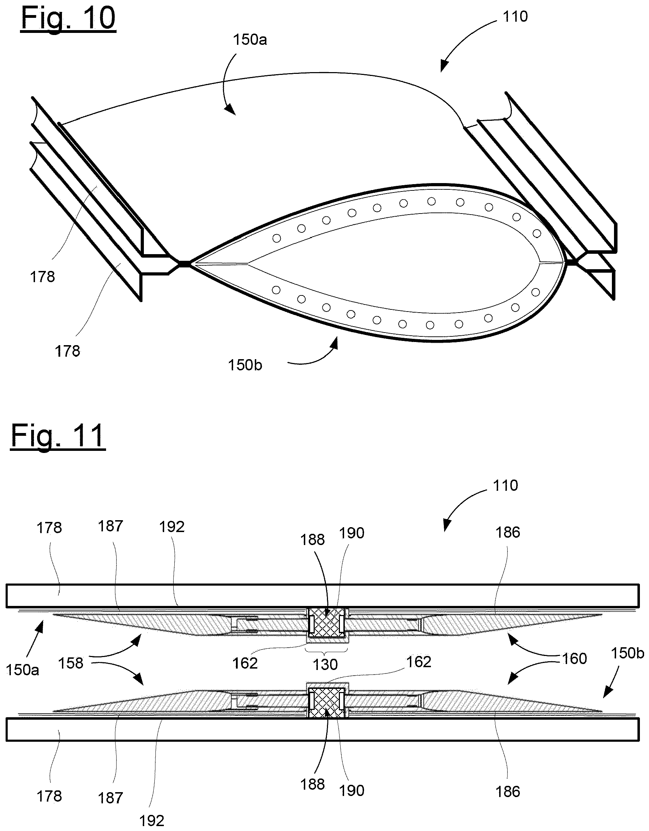

Figure 10 shows a schematic cross-section of the connected half-shells 150a and 150b, both half-shells 150a, 150b still in their initial molds 178.

Figure 11 shows a schematic cross-section in lengthwise direction including the division area 130, wherein it can be seen that both half-shells 150a, 150b comprise filler material 190 in the receiving channels 188 of their respective intermediate connection piece 162.

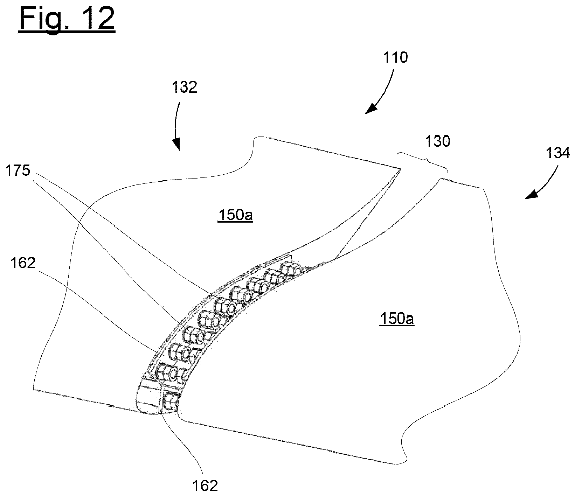

In a next step S4, the wind turbine rotor blade 110 is demolded, as schematically shown in figure 12, wherein the wind turbine rotor blade 110 is out of the mold 178.

In a further step S5, the filler material 190 of both half-shells 150a, 150b is removed from outside of the wind turbine rotor blade 110.

In a further step S6 (not shown) the intermediate connection pieces 162 of both half-shells 150a, 150b are dismounted by unscrewing the bolts 175 in order to get a first rotor blade segment 132 and a second rotor blade segment 134 of the wind turbine rotor blade 110.

In particular, since the receiving channels 188 of the intermediate connection pieces 162 are directed towards the respective mold surfaces 192 of the molds 178, the removal of filler material 190 and the disassembly of the intermediate connection pieces 162 is very easy, since access from outside the wind turbine rotor blade 110 to the screw bolts 175 is enabled.

### Reference signs

- 100: wind turbine
- 102: tower
- 104: foundation
- 106: nacelle
- 108: rotor
- 110: rotor blade
- 112: rotor hub
- 114: rotor blade root area
- 116: transition area
- 118: profile area
- 120: longitudinal direction
- 122: pressure side
- 124: suction side
- 126: rotor blade connection end
- 128: flange connection
- 130: division area
- 132: first rotor blade segment
- 134: second rotor blade segment
- 136: first connection end
- 138: second connection end
- 140: flange insert
- 142: laminate
- 144: connection element
- 146: cross section profile
- 148: shell
- 150: half-shell
- 150a: first half-shell
- 150b: second half-shell
- 152: connecting surface
- 154: first connection element
- 156: second connection element
- 158: first flange insert
- 160: second flange insert
- 162: intermediate connection piece
- 164: U-shaped cross section
- 166: pre-assembly table
- 172: first flange
- 174: second flange
- 175: screw bolts
- 176: rigid sub-unit
- 178: mold
- 180: first flange laminate
- 182: second flange laminate
- 184: outer surface of first flange laminate
- 186: outer surface of second flange laminate
- 187: laminate layers
- 188: receiving channel
- 190: filler material
- 192: mold surface
- 194: positioning means
- 196: positioning device
- 197: bridging element
- 198: mold flange
- S1 to S6: step

## Claims

1. Method for manufacturing a half-shell (150a, 150b) for a segmented wind turbine rotor blade (110), the method comprising the following steps:
- providing a plurality of first connection elements (154) and second connection elements (156),
- providing an intermediate connection piece (162) having a first flange (172) and a second flange (174) running parallel in a distance to each other,
- fixing the first flange (172) of the intermediate connection piece (162) to the first connection elements (154) and fixing the second flange (174) of the intermediate connection piece (162) to the second connection elements (156) such that a rigid sub-unit (176) is formed, wherein each first connection element (154) faces a corresponding second connection element (156),
- arranging the rigid sub-unit (176) in a mold (178) for the half-shell (150a, 150b) of the wind turbine rotor blade (110), and
- manufacturing the half-shell (150a, 150b) in which the rigid sub-unit (176) is embedded, such that a first flange laminate (180) and a second flange laminate (182) are formed which are interconnected by the intermediate connection piece (162), wherein
-- the first flange laminate (180) comprises the first connection elements (154) and the second flange laminate (182) comprises the second connection elements (156), and
- the first flange laminate (180) is associated with a first rotor blade segment (132) and the second flange laminate (182) is associated with a second rotor blade segment (134) of the segmented wind turbine rotor blade (110).

2. Method according to claim 1, wherein in the step of providing a plurality of first connection elements (154) and second connection elements (156), a first flange insert (158) and a second flange insert (160) is provided, wherein the first connection elements (154) are embedded in the first flange insert (158) and the second connection elements (156) are embedded in the second flange insert (160).

3. Method according to claim 1 or 2, wherein the intermediate connection piece (162) defines a predetermined distance and orientation of the first connection elements (154) and second connection elements (156).

4. Method according to any one of the preceding claims, wherein the intermediate connection piece (162) is fixed to the first connection elements (154) and the second connection elements (156) such that an outer surface (184) of the first flange laminate (180) is flush with respect to an outer surface (186) of the second flange laminate (182).

5. Method according to any one of the preceding claims, wherein the intermediate connection piece (162) is both screwed to the first connection elements (154) of the first flange laminate (180) and the second connection elements (156) of the second flange laminate (182).

6. Method according to any one of the preceding claims, wherein the intermediate connection piece (162) is made of a metal material, in particular of a steel material.

7. Method according to any one of the preceding claims, wherein the intermediate connection piece has a U-shaped cross-section (164).

8. Method according to any one of the preceding claims, wherein the intermediate connection piece (162) forms a receiving channel (188), wherein a filler material (190) is inserted in the receiving channel (188).

9. Method according to claim 8, wherein the filler material (190) is resin repellent.

10. Method according to claim 8 or 9, wherein the filler material (190) is a silicone material.

11. Method according to any one of claims 8 to 10, wherein the receiving channel (188) is directed towards a mold surface (192), when the rigid sub-unit (176) is arranged in the mold (178).

12. Method according to any one of the preceding claims, wherein the mold (178) comprises positioning means (194), wherein the positioning means (194) interact with the intermediate connection piece (162) such that the sub-unit (176) is held in the mold (178) in a predetermined position and orientation.

13. Method according to any one of the preceding claims, wherein the intermediate connection piece (162) comprises a positioning device (196), wherein the positioning device (196) is fixed to the mold (178) such that the sub-unit (176) is held in the mold (178) in a predetermined position and orientation.

14. Method according to claim 13, wherein the positioning device (196) is integrally formed with the intermediate connection piece (162) or is fixedly coupled to the intermediate connection piece (162).

15. Method according to claim 12, wherein the positioning means (194) protrudes outwards from a mold surface (192) and is integrally formed with a mold flange (198) or is fixedly coupled to the mold flange (198).

16. Method for manufacturing a wind turbine rotor blade, the method comprising the steps of:
- providing a first half-shell (150a) being manufactured according to any one of the preceding claims,
- providing a second half-shell (150b) being manufactured according to any one of the preceding claims,
- connecting the first half-shell (150a) and the second half-shell (150b) to form the wind turbine rotor blade (110),
- demolding the wind turbine rotor blade (110).

17. Method according to claim 16, wherein both the first and the second half-shells (105a, 150b) comprise filler material (190) accommodated in their U-shaped intermediate connection pieces (162) and wherein after the step of demolding, the filler material (190) of the first half-shell (150a) and the second half-shell (150b) is removed from outside of the wind turbine rotor blade (110).

18. Method according to claim 16 or 17, wherein the intermediate connection piece (162) is dismounted in order to get a first rotor blade segment (132) and a second rotor blade segment (134) of the wind turbine rotor blade (110), in particular after the step of removing the filler material (190) .
